# EUROPEAN PATENT SPECIFICATION

(11) **EP 2 490 831 B1**
(45) Date of publication and mention of the grant of the patent: **18.12.2013**
(21) Application number: 10776551.3
(22) Date of filing: 18.10.2010
(51) Int. Cl.: B08B 7/02, G01N 21/15, G01N 33/18

(54) **SELF CLEANING OPTICAL PROBE**
SELBSTREINIGENDE OPTISCHE SONDE
SONDE OPTIQUE AUTONETTOYANTE

(30) Priority: 21.10.2009 GB 0918434
(43) Date of publication of application: 29.08.2012
(73) Proprietor: Advanced Sensors Limited, Carrickfergus, County Antrim BT38 8YF (GB)
(72) Inventor: THABETH, Khalid, Newtownabbey County Antrim BT36 6LX (GB); LUNNEY, Frank, Belfast BT9 6LY (GB)
(74) Representative: Waller, Stephen
(86) International application number: PCT/EP2010/006334
(87) International publication number: WO 2011/047813

(56) References cited:
- EP-A1- 1 256 793
- WO-A1-2008/015390
- WO-A1-2009/134145
- DE-A1- 4 432 683
- US-B1- 6 437 326

## Description

This invention relates to a self cleaning optical carrier probe and in particular to a self cleaning optical probe for oil in water sensors.

There are many applications that require measurement of the quantity of oil that is present in a liquid. For example, in pipes leading from oil production or refining facilities or the like it may be required to measure the amount of oil that is present in the liquid (mainly water) flowing in the pipes. To this end it is known to provide an in-line measurement apparatus which measures the amount of oil that is present.

Oil has a natural fluorescence and so, commonly, such measurement apparatus measure the quantity of oil by the detection of fluorescence. Devices that detect and/or measure fluorescence are commonly referred to as fluorometers. A fluorometer usually includes a light source for causing fluorescence in a target substance and a detector for measuring the resultant fluorescence.

A typical in-line fluorometer has a measurement window through which the excitation light source is transmitted into a measurement region and through which the resultant fluorescent light is received by the fluorometer. One problem with such fluorometers is the fouling of the measurement window by substances within the measurement region. This problem may be addressed by using an ultrasonic probe with an embedded optical window. The window will be cleaned by the ultrasonic cavitations created by the ultrasonics. The probe will act as a carrier probe providing a clean viewing window of the medium by optical fibres, sensors or camera.

A known ultrasonic probe is disclosed in WO 2008/015390.

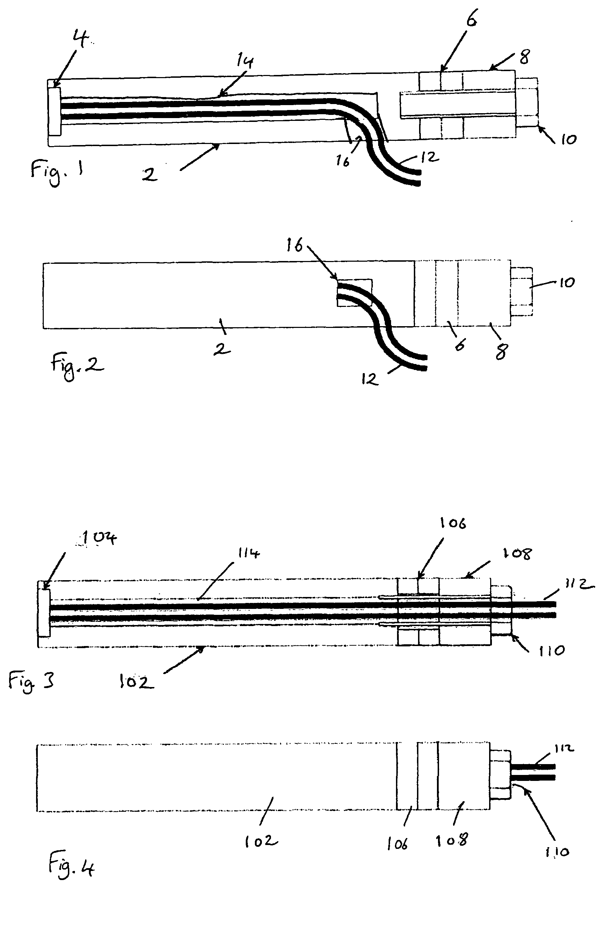

Figures 1 and 2 show a conventional ultrasonic probe, comprising an elongate hollow probe shaft 2 (known as a sonitrode) having a sapphire window 4 at a distal end thereof. Ceramic transducer discs 6 are mounted on an opposite end of the probe shaft, located between a back mass 8 and the probe shaft 2. A bolt 10 passes through the rear of the back mass 8 and through the ceramic transducer discs 6 into the rear end of the probe shaft 2 to secure the ceramic discs 6 and back mass 8 to the probe shaft 2. The bolt 10 is tightened to a specific design torque.

Optical fibres and electrical leads 12 are passed into a central channel 14 of the hollow probe shaft 2 through an entry slot 16 cut through side of the probe shaft 2. Such entry slot 16 creates a high impedance path for the ultrasonic transmission from the ceramic transducer discs 6 through the probe shaft 2 to the sapphire window 4. This impedance absorbs the sonic energy creating a local heating of the probe. The resulting issues are as follows:
1. Poor energy transmission from the ceramic transducer discs 6 to the sapphire window 4;
2. Poor impedance matching through the probe shaft 2 causes an unstable transmission path and an unstable resonance medium; as a result tuning of the probe shaft 2 is difficult and unstable;
3. The heat generation at the entry slot 16 can cause melting or fracturing of the optical fibres, copper wires or other cables 12 passing therethrough.

The present invention obviates these problems by providing an optical probe comprising an elongate hollow body having an internal chamber for receiving an optical sensor and/or an light emission device, such as one or more optical fibres, an optical window being provided at a first end of the hollow body, said optical window defining a wall of said internal chamber for transmitting light therethrough, and an ultrasonic transducer provided at a second end of the elongate body opposite said first end for cleaning said optical window via ultrasonic vibrations, wherein said ultrasonic transducer is provided with an entry aperture extending through the ultrasonic transducer, through which entry aperture optical fibres, cables or wires may pass to enter said internal chamber, wherein said ultrasonic transducer is secured to the first end of said elongate body by means of a fastener passing therethrough, said fastener being provided with a hole defining said entry aperture.

Preferably said aperture extends substantially coaxially with respect to the longitudinal axis of said elongate body.

Preferably said ultrasonic transducer comprising one or more ceramic transducer elements mounted against said first end of said elongate body and a reaction mass mounted against said one or more ceramic transducer elements,

In a preferred embodiment, said fastener may comprise a hollow bolt or stud having an axial hole extending therethrough defining said entry aperture.

By providing an entry aperture through said ultrasonic transducer rather than through a side of the elongate body, the abovementioned problems associated with the prior art are avoided.

Preferably one or more light guides, such one or more optical fibres, extend through said entry aperture into said chamber within the hollow body of the optical probe.

At least a portion of the hollow body of the optical probe may be lined or coated internally with a suitable lining to protect optical fibres and other cables or wires passing therethrough. In one embodiment the optical probe may be lined with an acetyl lining.

In one embodiment, said elongate hollow body comprises a tubular member, said chamber being defined by an internal bore of said tubular member. Said ultrasonic transducer, preferably comprising one or more ceramic transducer discs and a tubular reaction mass, may be mounted coaxially with said tubular member and may be secured thereto by means of a hollow bolt extending through the ultrasonic transducer.

An embodiment of the present invention will now be illustrated, by way of example, with reference to the accompanying drawings, in which:-
Figure 1 is a longitudinal sectional view through a known ultrasonic probe;
Figure 2 is a side view of the ultrasonic probe of Figure 1;
Figure 3 is a longitudinal sectional view through an ultrasonic probe in accordance with an embodiment of the present invention; and
Figure 4 is a side view of the ultrasonic transducer of Figure 3.

As shown in the drawings, an ultrasonic probe in accordance with an embodiment of the present invention comprises a hollow cylindrical probe shaft 102 defining a central channel 114 for receiving optical sensors and/or light transmission devices, such as optical fibres, and having a sapphire window 104 at a distal end thereof, ceramic transducer discs 106 being mounted on an opposite end of the probe shaft, located between a back reaction mass 108 and the probe shaft 102. A hollow bolt 110 passes through the rear of the back mass 108 and through the ceramic transducer discs 106 into the rear end of the probe shaft 102 to secure the ceramic discs 106 and back mass 108 to the probe shaft 102.

Optical fibres and electrical leads 112 are passed into the central channel 114 the hollow probe shaft 102 through the centre of the hollow bolt 110, avoiding the need for any discontinuities in the wall of the probe shaft 102 which might lead to high impedance paths for the ultrasonic transmission from the ceramic transducer discs 106 through the probe shaft 102 to the sapphire window 104.

The clamping of the ceramic discs 106 between the back mass 108 and the probe shaft 102 is performed unconventionally with a hollow bolt 110 that has a channel through its centre. The above unconventional method of clamping the ceramic discs 106 negates the requirement for an entry slot, as it creates an extension of the channel 114 through the probe, this provides the following benefits:
1. Uniform conductance through the probe creates an efficient stable transmission path from the ceramic discs through to the sapphire window;
2. Efficient transmission through the probe, does not generate any hot spots that may affect optical fibres or copper wires extending into and through the probe shaft 102;
3. Ease of insertion and extraction of optical fibres, copper wires or any other medium or device into and out of the probe shaft 102;
4. Manufacture, deployment and maintenance may be greatly eased, again reducing the possibility of damage to the Optical Fibre, Copper Wires or other.

The probe may be lined with an acetyl lining to absorb any sonic shock that may be caused by the ultrasonic transducer disc 106, this in turn protects the optical fibres, copper wires or other devices located within the channel 114 of the probe shaft 102.

Such a probe construction in accordance with the present invention facilitates the insertion of numerous devices e.g optical sensors, cameras, light sources etc. effectively creating a generic self cleaning carrier probe that will facilitate the insertion of various devices into fluid environments, negating the need for additional routine cleaning.

## Claims

1. An optical probe comprising an elongate hollow body (102) having an internal chamber (114) for receiving an optical sensor and/or an light emission device, such as one or more optical fibres, an optical window (104) being provided at a first end of the hollow body, said optical window defining a wall of said internal chamber for transmitting light therethrough, and an ultrasonic transducer provided at a second end of the elongate body opposite said first end for cleaning said optical window via ultrasonic vibrations, wherein said ultrasonic transducer is provided with an entry aperture extending through the ultrasonic transducer, through which entry aperture optical fibres, cables or wires (112) may pass to enter said internal chamber, **characterised in that** said ultrasonic transducer is secured to the first end of said elongate body by means of a fastener (110) passing therethrough, said fastener (110) being provided with a hole defining said entry aperture.

2. An optical probe as claimed in claim 1, wherein said entry aperture extends substantially coaxially with respect to the longitudinal axis of said elongate body (102).

3. An optical probe as claimed in any preceding claim, wherein said ultrasonic transducer comprises one or more ceramic transducer elements (106) mounted against said first end of said elongate body (102) and a reaction mass (108) mounted against said one or more ceramic transducer elements (106).

4. An optical probe as claimed in any preceding claim, wherein said fastener (110) comprises a threaded fastener.

5. An optical probe as claimed in claim 4, wherein said fastener (110) comprises a hollow bolt or stud having an axial hole extending therethrough defining said entry aperture.

6. An optical probe as claimed in any preceding claim, wherein one or more light guides (112) extend through said entry aperture into said chamber (114) within the hollow body (102) of the optical probe.

7. An optical probe as claimed in claim 6, wherein said one or more light guides (112) comprise one or more optical fibres.

8. An optical probe as claimed in any preceding claim, wherein at least a portion of the hollow body (102) of the optical probe is lined or coated internally with a suitable lining to protect any optical fibres and other cables or wires passing therethrough.

9. An optical probe as claimed in claim 8, wherein at least a portion of the hollow body (102) of the optical probe is lined with an acetyl lining.

10. An optical probe as claimed in any preceding claim, wherein said elongate hollow body (102) comprises a tubular member, said chamber being (114) defined by an internal bore of said tubular member.

11. An optical probe as claimed in claim 10, wherein said ultrasonic transducer is mounted coaxially with said tubular member.

## Patentansprüche

1. Optische Sonde, die einen länglichen Hohlkörper (102) umfasst, der Folgendes aufweist: eine innere Kammer (114) Für den Empfang eines optischen Sensors und/oder einer Lichtemissionsvorrichtung, wie beispielsweise eine oder mehrere optische Fasern, ein optisches Fenster (104), das an einem ersten Ende des Hohlkörpers vorgesehen ist, wobei das optische Fenster eine Wand der inneren Kammer für die Übertragung von Licht dort hindurch definiert, und einen Ultraschallwandler, der an einem zweiten Ende des länglichen Körpers gegenüber dem ersten Ende zum Reinigen des optischen Fensters mittels Ultraschallschwingungen vorgesehen ist, wobei der Ultraschallwandler mit einer Eingangsöffnung versehen ist, die sich durch den Ultraschallwandler erstreckt, wobei optische Fasern, Kabel oder Drähte (112) durch die Eingangsöffnung geleitet werden können, um in die innere Kammer zu gelangen, **dadurch gekennzeichnet, dass** der Ultraschallwandler an dem ersten Ende des länglichen Körpers mittels einer Befestigungsvorrichtung (110), die dort hindurch verläuft, befestigt ist, wobei die Befestigungsvorrichtung (110) mit einem Loch versehen ist, das die Eintrittsöffnung definiert.

2. Optische Sonde nach Anspruch 1, wobei sich die Eingangssöffnung im Wesentlichen koaxial zur Längsachse des länglichen Körpers (102) erstreckt.

3. Optische Sonde nach einem der vorhergehenden Ansprüche, wobei der Ultraschallwandler Folgendes umfasst: ein oder mehrere Keramikwandlerelemente (106), die an dem ersten Ende des länglichen Körpers (102) befestigt sind, und eine Reaktionsmasse (108), die an dem einen oder den mehreren Keramikwandlerelementen (106) befestigt ist.

4. Optische Sonde nach einem der vorhergehenden Ansprüche, wobei die Befestigungsvorrichtung (110) eine Befestigungsvorrichtung mit Gewinde umfasst.

5. Optische Sonde nach Anspruch 4, wobei die Befestigungsvorrichtung (110) eine hohle Schraube oder einen hohlen Bolzen umfasst, die bzw. der eine axiale Bohrung aufweist, die sich dort hindurch erstreckt und die Eingangssöffnung definiert.

6. Optische Sonde nach einem der vorhergehenden Ansprüche, wobei sich ein oder mehrere Lichtleiter (112) durch die Eingangssöffnung in die Kammer (114) innerhalb des Hohlkörpers (102) der optischen Sonde erstrecken.

7. Optische Sonde nach Anspruch 6, wobei der eine oder die mehreren Lichtleiter (112) eine oder mehrere optische Fasern umfassen.

8. Optische Sonde nach einem der vorhergehenden Ansprüche, wobei mindestens ein Teil des Hohlkörpers (102) der optischen Sonde intern mit einer geeigneten Auskleidung ausgekleidet oder beschichtet ist, um optische Fasern und andere Kabel oder Drähte, die dort hindurch verlaufen, zu schützen.

9. Optische Sonde nach Anspruch 8, wobei mindestens ein Abschnitt des Hohlkörpers (102) der optischen Sonde mit einer Acetylauskleidung ausgekleidet ist.

10. Optische Sonde nach einem der vorhergehenden Ansprüche, wobei der längliche Hohlkörper (102) ein röhrenförmiges Element umfasst, wobei die Kammer (114) durch eine interne Bohrung des röhrenförmigen Elements definiert ist.

11. Optische Sonde nach Anspruch 10, wobei der Ultraschallwandler koaxial mit dem röhrenförmigen Element befestigt ist.

## Revendications

1. Sonde optique comportant un corps creux allongé (102) ayant une chambre interne (114) à des fins de réception d'un capteur optique et/ou d'un dispositif d'émission de lumière, tel qu'une ou plusieurs fibres optiques, une fenêtre optique (104) mise en oeuvre au niveau d'une première extrémité du corps creux, ladite fenêtre optique définissant une paroi de ladite chambre interne à des fins de transmission d'une lumière à travers celle-ci, et un transducteur ultrasonore mis en oeuvre au niveau d'une seconde extrémité du corps allongé de manière opposée par rapport à ladite première extrémité et permettant de nettoyer ladite fenêtre optique au moyen de vibrations ultrasonores, dans laquelle ledit transducteur ultrasonore comporte une ouverture d'entrée s'étendant au travers du transducteur ultrasonore, ouverture d'entrée par laquelle des fibres optiques, des câbles ou des fils (112) peuvent passer pour entrer dans ladite chambre interne, **caractérisée en ce que** ledit transducteur ultrasonore est assujetti au niveau de la première extrémité dudit corps allongé au moyen d'une pièce de fixation (110) passant au travers, ladite pièce de fixation (110) comportant un trou définissant ladite ouverture d'entrée.

2. Sonde optique selon la revendication 1, dans laquelle ladite ouverture d'entrée s'étend sensiblement de manière coaxiale par rapport à l'axe longitudinal dudit corps allongé (102).

3. Sonde optique selon l'une quelconque des revendications précédentes, dans laquelle ledit transducteur ultrasonore comporte un ou plusieurs éléments transducteurs à céramique (106) montés contre ladite première extrémité dudit corps allongé (102) et un massif antivibratoire (108) monté contre lesdits un ou plusieurs éléments transducteurs à céramique (106).

4. Sonde optique selon l'une quelconque des revendications précédentes, dans laquelle ladite pièce de fixation (110) comporte une pièce de fixation filetée.

5. Sonde optique selon la revendication 4, dans laquelle ladite pièce de fixation (110) comporte un goujon ou boulon creux ayant un trou axial s'étendant au travers de celui-ci pour définir ladite ouverture d'entrée.

6. Sonde optique selon l'une quelconque des revendications précédentes, dans laquelle un ou plusieurs dispositifs de guidage de lumière (112) s'étendent au travers de ladite ouverture d'entrée jusque dans ladite chambre (114) à l'intérieur du corps creux (102) de la sonde optique.

7. Sonde optique selon la revendication 6, dans laquelle lesdits un ou plusieurs dispositifs de guidage de lumière (112) comportent une ou plusieurs fibres optiques.

8. Sonde optique selon l'une quelconque des revendications précédentes, dans laquelle au moins une partie du corps creux (102) de la sonde optique est revêtue ou enduite à l'intérieur au moyen d'un revêtement approprié pour protéger les fibres optiques ou autres câbles ou fils passant au travers.

9. Sonde optique selon la revendication 8, dans laquelle au moins une partie du corps creux (102) de la sonde optique est revêtue d'un revêtement d'acétyle.

10. Sonde optique selon l'une quelconque des revendications précédentes, dans laquelle ledit corps creux allongé (102) comporte un élément tubulaire, ladite chambre (114) étant définie par un alésage interne dudit élément tabulaire.

11. Sonde optique selon la revendication 10, dans laquelle ledit transducteur ultrasonore est monté de manière coaxiale par rapport audit élément tubulaire.
